## Europäisches Patentamt

## European Patent Office

## Office européen des brevets

(1) Publication number: **0 159 646**
**B1**

## EUROPEAN PATENT SPECIFICATION

(45) Date of publication of patent specification: **26.07.89**

(51) Int. Cl.⁴: **G 01 N 15/02**

(21) Application number: **85104540.1**

(22) Date of filing: **15.04.85**

(54) A device for separating airborne particles in dependence on grain size.

(30) Priority: **19.04.84 IT 343484**

(43) Date of publication of application:
**30.10.85 Bulletin 85/44**

(45) Publication of the grant of the patent:
**26.07.89 Bulletin 89/30**

(84) Designated Contracting States:
**DE FR GB NL**

(56) References cited:
**FR-A-2 398 299**

**AEROSOL SCIENCE, vol. 1, 1970, pages 175-183, Pergamon Press, Ltd., GB; D. HOCHRAINER et al.: "Zur Abscheidung von Aerosolteilchen nach ihrer Grösse mittels einer neuartigen Impaktordüse"**

(73) Proprietor: **Prodi, Vittorio**
**Via Martinelli, 7**
**I-40137 Bologna (IT)**

(72) Inventor: **Prodi, Vittorio**
**Via Martinelli, 7**
**I-40137 Bologna (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

The present invention relates to a device for separating airborne particles into classes determined by grain size, adapted for use as a personal sampler able to be carried by the user in order to determine the risk to the user from inhalations.

As is known, in currently used devices the grain size information is provided by a pre-selector, which simulates the extrathoracic and tracheobronchial passages, and by a filter. In the pre-selector, which is normally constituted by a cyclone, the particles of larger diameter are deposited, and in the filter the particles of smaller diameter are deposited.

In Aerosol Science, Volume 1, 1970 pages 175—183, Pergamon Press, Ltd., GB, is described an apparatus, in which a central flow of clean air forms a shielding flow over a surface orthogonal to the axis of the flow. The aerosol particles contained in a layer adjacent to the clean air are carried outward by the shielding flow and a flow of the air and of the aerosol particles contained in it is compelled to bend when it hit said surface; due to the bend the particles are separated according to their size leaving the original streamlines by a distance which is a function of particle inertia and resistance.

In the French Patent No. 2 398 299 is described a device for separating aerosol particles operating on the ground of the above mentioned concept.

The device comprises a membrane filter disposed downstream of the flow of the air and aerosol particles which goes out of a channel of rectangular section obtained in the body of the device. Due to the bend of the streamlines which occurs when the air and particles flows into a chamber comprised between the body and the filter the particles are separated according to their size.

In the device of type described does not occur a well defined and a clear separation between the particles of different diameter; this is substantially due to the geometry of the channel and of the chamber of the device. Further this device has a complex structure and therefore is,of high production costs and requires expensive maintenance operations; therefore it is not apt for use as a personal sampler able to be carried by a user.

Devices for separating airborne particles, in particular particles of an aerosol, into classes by grain size, and operating on the ground of the technique of inertial separation are described in the European Patent Applications of the Applicant No. 85 104541 (EP—A—159002), 85 10452 (EP—A—159647) and 85 104543 (EP—A—159648).

The object of the present invention is that of providing a device for separating airborne particles into grain size clsses of the type before described, with which an elongation of the zones of separation between the particles of different diameters can be obtained; another object is that of providing a device which is simple in construction and requires no particular maintenance operation and is of low production cost.

According to the present invention there is provided a device for separating airborne particles into grain size classes, comprising a hollow base body in which, in use of the device there can be created a depression by means of an external member; an upper body having a longitudinal axis along which is formed a through channel for conveyance, in use of the device, of particle-bearing air, which channel has a frusto-conical configuration with the region of greater diameter in the upper part and which has a lower end of circular outline; a mesh positioned between the said base body and the said upper body and operable to support a filter defining with the lower face of the said upper body a cavity which is in communication, through the said lower end with the said through passage; a nozzle within and coaxial to said channel for ejecting, in use of the device, close to the lower end of said channel, filtered air.

For a better understanding of the present invention there will now be described a preferred embodiment purely by way of non limitative example, with reference to the attached drawings in which there is illustrated a section of the device of the invention, which has been generally indicated with the reference numeral 1. This device comprises a base body 2 formed substantially as a funnel with upwardly facing concavity.

In the lower part of the body 2 there is formed a threaded hole 3 engaged by an upper threaded portion 4 of a pipe union 5 a lower portion 6 of which, outside the hole 3, supports in use the end of a duct (not illustrated) which can put a pump into communication with the interior of the body 2 in order to create therein a depression. On the upper edge of the body 2 rests a mesh 8 of circular outline and on this is deposited a filter 11, also of circular outline. The assembly comprising the mesh 8 and the filter 11 is pressed between the upper edge of the body 2 and an annular flange 12 extending outwardly from a lower end of a sleeve 13 coaxial with but positioned above the body 2. The device 1 further includes a ring 14 which is threaded internally and which can be screwed onto a threaded portion 15 of the body 2, formed on the outer wall thereof. From the upper end of the ring 14 there extends, inwardly, an annular flange 16, and between the lower surface of this latter and the upper surface of the flange 12 there is disposed a sealing ring 17. In use, by screwing the ring 14 onto the portion 15, the flange 16 presses the flange 12 downwardly, which compresses the assembly defined by the filter 11 and the mesh 8 onto the upper edge of the body 2. In order to hold the mesh in tension the perimetral edge of this extends outwardly between the flange 12 and the upper edge of the body 2 in such a way that it is drawn downwardly by the inner surface of the ring 14 during its screwing onto the portion 15.

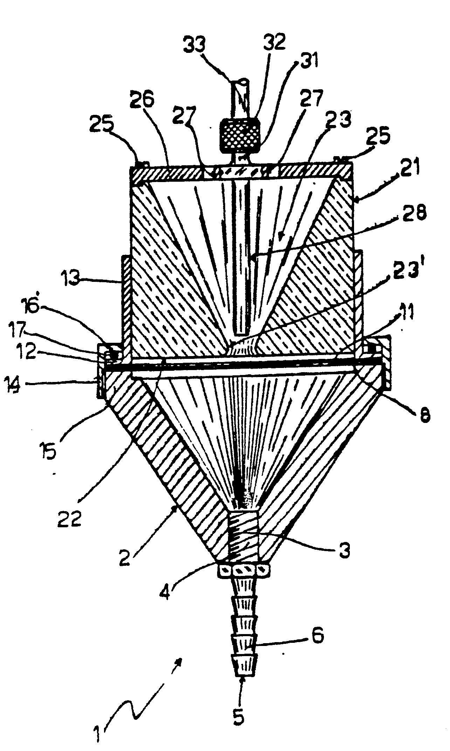

As illustrated in the attached drawing, within the sleeve 13 there is lodged the lower part of cylindrical body 21 coaxial with the body 2 the lower surface of which faces the filter 11 and is disposed at a predetermined distance therefrom in such a way as to define a cylindrical cavity 22. Along the longitudinal axis of the body 21 there is formed a through channel 23 which opens out at its lower end into the cavity 22 and which has a frusto-conical configuration with the region of greater diameter located in the uppermost part; the channel 23 therefore represents a nozzle which injects an aerosol into the cavity 22. For this purpose the channel 23 has a lower end, hereinafter termed the outlet end and indicated with 23', which has no sharp corners since these have been suitably rounded.

On the upper face of the body 21 there is fixed, by screws 25, a plate 26 of circular geometry in which there is formed a plurality of through holes 27 which can put the surrounding air in communication with the channel 23. Within this latter, and coaxially thereto, there is disposed a nozzle 28 which can inject filtered air in close proximity to the outlet 23'; the nozzle 28 is fixed to the plate 26, for example by welding and has an upper end 31 projecting out from the plate 26 and connected, by means of a connector element 32, with the end of a duct 33 which can put the interior of the nozzle 28 into communication with a source of filtered air.

The operation of the device 1 is as follows.

In detail, the said pump creates a depression within the body 2 which draws into the channel 23, via the holes 27, the aerosol generated by the air present in the surrounding environment and particles of dust which are in suspension therein. The pump also draws filtered air from the said source via the nozzle 28 and the fluid, formed from the aerosol and the filtered air, is drawn into the cavity 22 via the outlet 23'. The technique of inertial separation consists in the fact that the particles flowing past a sharp curvature, (outlet 23') by inertia tend to maintain their velocity in direction and sense, but are drawn by the flow of fluid; the particles therefore are displaced from the original streamline (which flows out downstream of the curvature) by a distance which is a function only of the aerodynamic diameter. Consequently the particles are separated according to diameter into various bands of fluid and all the particles of the same grain size will be present within their own streamline; after having traversed the curvature the particles being to deposit onto annular portions of the filter 11 starting from the particles of greatest diameter. The fluid, cleaned of the particles, will subsequently enter into the interior of the body 2 towards the pump. Subsequently it is possible to extract the filter 11 and perform on the deposit all the chemical and physico chemical analyses which are considered necessary for the determination of the toxicity of the particles in suspension in the air and therefore in the inhalations of the user.

With the device of the invention there is attained on the filter 11 a continuous deposit of particles and, more precisely, a deposit of partices of greater diameter along the central annular portions and gradually of smaller diameter towards the peripheral annular portions of the filter 11. In order to better analyse the deposit it is possible to calibrate the device 1 in such a way as to separate the filter 11 into several parts, for example into three parts, in each of which there takes place the deposit of particles with a diameter lying within a predetermined interval; for example it is possible to separate the filter 11 into a first part which is that closest to the outlet 23' in which there occurs the deposit of particles with a diameter greater than 10 μm, second, central part, in which takes place the deposition of particles of the diameter lying between 2.5 or 3.5 μm and 10 μm, and a third part which is the periphery in which there takes place the deposition of particles with a diameter less than 2.5 or 3.5 μm. It is apparent that if in the filter 11 there are provided reference indications for delimiting the three parts, it is possible to cut these along the zones of separation between the various parts and therefor analyse individually the parts which are of greatest interest or all three parts to determine the characteristics of the three grain size fractions into which the particles have been separated. Normally the most interesting part for determining the toxicity of the air which the user breathes is the second, that is to say that having particles lying between 2.5 or 3.5 μm and 10 μm. The minimum threshold of such part can be 2.5 or 3.5 μm according to the sensitivity of the user; the more sensitive the user is the lower the value of the threshold has to be.

It will be evident that the advantages which are obtained with the device 1 are those of having provided a portable instrument in which it has been possible to apply the technique of inertial separation, and of being able to proceed with ease in analysing the deposit sub-divided into three grain size classes. It is to be noted that the inertial separation is assisted by the particular cylindrical geometry of the device 1 in that with such geometry, it has been found experimentally, an elongation of the zones of separation between the particles of different diameters has been noted and therefore a better and clearer separation of the grain size classes of these. Further, the device is of simple construction and requires no particular maintenance operations, and is of low production costs.

Finally, it is clear that the device described and illustrated here can be modified and varied without by this departing from the protective scope of the claims.

## Claims

1. A device for supporting airborne particles into grain size classes comprising:

a hollow base body (2) in which, in use of the device, there can be created a depression by means of an external member;

an upper body (21) having a longitudinal axis along which is formed a through channel (23) for conveyance, in use of the device, of particle-bearing air, which channel (23) has a frusto-conical configuration with the region of greater diameter in the upper part and which has a lower end (23') of circual outline;

a mesh (8) positioned between the said base body (2) and the said upper body (21) and operable to support a filter (11) defining with the lower face of the said upper body (21) a cavity (22) which is in communication, through the said lower end (23') with the said through passage (23);

a nozzle (28) within and coaxial to said channel (23) for ejecting, in use of the device, close to the lower end (23) of said channel, filtered air.

2. A device according to Claim 1, characterised by the fact that the said channel (23) has a cover plate (26) fixed on the upper face of the said upper body (21); there being formed on the said plate (26) at least one hole (27) which, in use of the device, puts the said channel (23) into communication with the environment surrounding the source of particle-bearing air.

3. A device according to Claim 2, characterised by the fact that the said plate (26) supports the said nozzle (28) which is connected by means of a duct (33) with a source of filtered air.

4. A device according to one of the preceding claims, characterised by the fact that the said upper body (21) is of cylindrical configuration and the said base body (2) is formed as a funnel; the said base body (2) having a second threaded hole (3) engaged by an upper portion (4) of a pipe union (5) which puts the said member into communication with the interior of the said base body (2).

5. A device according to Claim 4, characterised by the fact that the said mesh (8) and the said filter (11) are of circular geometry.

6. A device according to Claim 5, characterised by the fact that the lower part of the said upper body (21) is lodged within the interior of a sleeve (13) and is supported by this latter; a first annular flange (12) extends outwardly from a lower end of the said sleeve (13) to press the peripheral edge of the assembly comprising the said mesh (8) and the said filter (11) onto the edge of the upper end of the said base body (2).

7. A device according to Claim 6, characterised by the fact that the upper end of the said body body (2) has an externally threaded lateral portion (15) on which is screwed a ring (14) from the upper end of which extends, inwardly, a second annular flange (16) to press the said first flange (12) onto the upper end of the said base body (2).

8. A device according to Claim 7, characterised by the fact that a sealing ring (17) is disposed between the said first flange (12) and the said second flange (16).

**Patentansprüche**

1. Vorrichtung zum Absondern von in der Luft befindlichen Partikeln, klassifiziert in Korngrössen und bestehend aus:

einem hohlen Grundkörper (2), in dem es bei Gebrauch der Vorrichtung möglich ist, einen Unterdruck mittels eines Aussenelementes zu schaffen;

einem oberen Körper (21) mit Längsachse, längs der ein durchgehender Kanal für den Transport von Luft geformt ist in der sich die Partikel befinden, Kanal (23) der eine kegelstumpfförmige Gestaltung mit grösserem Durchmesser im Oberteil und ein unteres Ende (23') mit kreisrundem Profil aufweist;

einem zwischen dem Grundkörper (2) und dem oberen Körper (21) liegendes Sieb (8), dazu vorgesehen einen Filter (11) zu tragen, der mit dem Unterteil des oberen Körpers (21) einen Hohlraum (22) bildet, welcher durch das untere Ende (23') mit dem Durchgang (23) in Verbindung steht;

einer Düse (28), die sich innerhalb und koaxial zum Kanal (23) befindet um bei Gebrauch der Vorrichtung die gefilterte Luft in der Nähe des unteren Endes (23') herauszulassen.

2. Vorrichtung nach Anspruch 1, dadurch gekennzeichnet dass der Kanal (23) eine an der Oberseite des Oberteils (521) befestigte Abdeckplatte (26) besitzt, wo auf der Platte mindestens eine Bohrung (27) vorgesehen ist, die bei Gebrauch der Vorrichtung den Kanal (23) mit dem Berreich verbindet, der die Quelle der die Partikel enthaltende Luft umgibt.

3. Vorrichtung nach Anspruch 2, dadurch gekennzeichnet dass die Abdeckpaltte (26) die Düse (28) trägt, die durch eine Leitung (33) an eine Quelle gefilteter Luft angeschlossen ist.

4. Vorrichtung nach einem der vorhergehenden Ansprüche, dadurch gekennzeichnet dass der obere Körper (21) eine zylindrische Form besitzt, der Grundkörper (2) als Trichter ausgebildet ist, wo der Grundkörper (2) eine zweite Gewindebohrung (3) besitzt, in die ein Oberteil (4) eines Verbindungsrohres (5) mündet, welches das Element an das Innere des Grundkörpers (2) anschliesst.

5. Vorrichtung nach Anspruch 4, dadurch gekennzeichnet dass das Sieb (8) und der Filter (11) eine kreisrunde Geometrie aufweisen.

6. Vorrichtung nach Anspruch 5, dadurch gekennzeichnet dass das Unterteil des oberen Körpers (21) im Innern einer Hülse (13) montiert ist und von letzterer gehalten wird, wo ein erster ringförmigen Flansch sich so von einem unteren Ende der Hülse (13) erstreckt, dass der Umfangsrand des aus Sieb (8) und Filter (11) bestehenden Aggregates auf den Rand des oberen Endes des Grundkörpers (2) gepresst wird.

7. Vorrichtung nach Anspruch 6, dadurch gekennzeichnet dass das obere Ende des Grundkörpers (2) ein mit Aussengewinde versehenes Seitenteil (15) besitzt, auf dem sich ein zweiter ringförmiger Flansch (16) so nach innen erstreckt, dass der erste Flansch (12) auf das obere Ende des Grundkörpers (2) gepresst wird.

8. Vorrichtung nach Anspruch 7, dadurch gekennzeichnet, dass zwischen dem ersten (12) und dem zweiten Flansch (16) ein Dichtring (17) vorgesehen ist.

## Revendications

1. Dispositif pour séparer des particules en suspension dans l'air en des classes granulométriques, comprenant:

un corps de base creux (2), dans lequel, lors de l'utilisation du dispositif, on peut créer une dépression à l'aide d'un élément extérieur;

un corps supérieur (21) possédant un axe longitudinal, le long duquel est formé un canal traversant (23) servant à véhiculer, lors de l'utilisation du dispositif, l'air portant les particules, lequel canal (23) possède une configuration tronconique, la région de plus grand diamètre étant située dans la partie supérieure, et comporte une extrémité inférieure (23') possédant un contour circulaire;

un tamis (8) situé entre ledit corps de base (2) et ledit corps supérieur (21) et pouvant être actionné de manière à supporter un filtre (11) définissant, avec la face inférieure dudit corps supérieur (21) une cavité (22) qui est en communication, par l'intermédiaire de ladite extrémité inférieure (23'), avec ledit passage traversant (23);

une buse (28) située dans et coaxiale audit canal (23) pour éjecter l'air filtré, lors de l'utilisation du dispositif, à proximité de l'extrémité inférieure (23) dudit canal.

2. Dispositif selon la revendication 1, caractérisé en ce que ledit canal (23) possède une plaque de couverture (26) fixée sur la face supérieure dudit corps supérieur (21), tandis que dans ladite plaque supérieure (26) se trouve ménagé au moins un trou (27) qui, lors de l'utilisation du dispositif, met en communication ledit canal (23) avec l'environnement entourant la source de l'air portant les particules.

3. Dispositif selon la revendication 2, caractérisé en ce que ladite plaque (26) supporte ladite buse (28), qui est raccordée à une source d'air filtré au moyen d'un conduit (33).

4. Dispositif selon l'une des revendications précédentes, caractérisé en ce que ledit corps supérieur (21) possède une configuration cylindrique et que ledit corps de base (2) est réalisé sous la forme d'un entonnoir; ledit corps de base (2) possédant un second trou taraudé (3), dans lequel s'engage une partie supérieure (4) d'un raccord (5) pour tuyau, qui place ledit élément en communication avec l'intérieur dudit corps de base (2).

5. Dispositif selon la revendication 4, caractérisé en ce que ledit tamis (8) et ledit filtre (11) possèdent une forme circulaire.

6. Dispositif selon la revendication 5, caractérisé en ce que la partie inférieure dudit corps supérieur (21) est logée à l'intérieur d'un manchon (13) et est supportée par ce dernier; et qu'une première bride annulaire (12) s'étend vers l'extérieur à partir d'une extrémité inférieure dudit manchon (13) de manière à repousser le bord périphérique de l'ensemble incluant ledit tamis (8) et ledit filtre (11) sur le bord de l'extrémité supérieure du corps de base (2).

7. Dispositif selon la revendication 6, caractérisé en ce que l'extrémité supérieure dudit corps de base (2) possède une partie latérale (15) filetée extérieurement, sur laquelle est vissée une bague (14), à partir de l'extrémité supérieure de laquelle s'étend, vers l'intérieur, une seconde bride annulaire (16) destinée à repousser ladite première bride (12) sur l'extrémité supérieure dudit corps de base (2).

8. Dispositif selon la revendication 7, caractérisé en ce qu'une bague d'étanchéité (17) est disposée entre ladite première bride (12) et ladite seconde bride (16).

EP 0 159 646 B1

1